(19) Europäisches Patentamt
European Patent Office
Office européen des brevets

(11) EP 1 855 421 A1

(12) # EUROPEAN PATENT APPLICATION

(43) Date of publication:
**14.11.2007 Bulletin 2007/46**

(51) Int Cl.:
***H04L 12/56*** *(2006.01)*

(21) Application number: **06009473.7**

(22) Date of filing: **08.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Nokia Corporation**
**02150 Espoo (FI)**

(72) Inventors:
- **Frederiksen, Frank**
  **9270 Klarup (DK)**
- **Kashima, Tsuyoshi**
  **Yokohama 226-0014 (JP)**
- **Kolding, Troels**
  **9270 Klarup (DK)**

(74) Representative: **Ungerer, Olaf**
**Eisenführ, Speiser & Partner,**
**P.O. Box 31 02 60**
**80102 München (DE)**

(54) **Optimized signalling of scheduling decisions**

(57) The present invention relates to a method, terminal device, network element, and computer program product for signalling a scheduling information (101) used for indicating resource allocation states of a plurality of available resource blocks to a plurality of scheduled devices (10), wherein a resource allocation state is set for each of the available resource blocks and multiplied by the number of possible allocation states to the power of a sequential number of the resource block. Then, the multiplication results of all available resource blocks are summed and the summing result (103) is transmitted to the plurality of scheduled devices (10). Thereby, the required amount of signalling bits can be reduced considerably, while still maintaining the same signalling content.

101
102
PRB index
0 1 N-1
PRB index
0 1 N-1
1 0 ... 1 1 0 ... 1
# of entries
DL UE index
0 1 M-1
DL Entry #1
DL Entry #2
...
DL Entry #M
PRB (EEI=1) index
0 2 N-1
x y ... z
Localized or distributed
RTI bits
Entry exists or not
EEI bits
Entry contains UE-ID, TFI, etc.
UE index

Fig. 3

EP 1 855 421 A1

101
102
103
102
101
102
20
200
COD
10
100
DEC

Fig. 4

## Description

FIELD OF THE INVENTION

The present invention relates to a method, terminal device, network element, and computer program product for signalling a scheduling information used for indicating resource allocation states of a plurality of available resource blocks to a plurality of scheduled devices.

BACKGROUND OF THE INVENTION

The basic time-frequency resource unit or resource block in OFDM (Orthogonal Frequency Division Multiplexing) links is denoted a resource block. It consists of a rectangular time-frequency area that comprises a number of subsequent OFDM symbols and a number of adjacent subcarriers. A resource block contains payload symbols and pilot symbols. It may also contain control symbols that are placed within the resource blocks to minimize feedback delay (in-resource control signalling). The number of offered payload bits per resource block will depend on the utilized modulation-coding formats, and on the sizes of the resource blocks. Each resource block entity comprises a predetermined number of subcarriers and spans a time window of a predetermined number of OFDM symbols.

According to the concept creation for the long term evolution (LTE) of 3GPP ($3^{rd}$ Generation Partnership Project), frequency domain packet scheduling decisions are based on allocations on a grouped basis - that is, a user is only given or allocated a continuous resource, e.g., resource block, in the frequency domain. However, in most cases this will not provide the optimum solution, and there is a probability that the 3GPP study item will take a direction of allowing for full flexible resource allocation within the number of user frequency resource blocks that are available within the system bandwidth.

The problem is that the packet scheduler/link adaptation unit might find that a varying number of users will provide the best efficiency in terms of system capacity. That is, for one allocation period (e.g., sub-frame in 3GPP) the best solution might be to schedule 3 users, while for the next sub-frame it might be a better solution to schedule 5 users. These scheduling decisions have to be transferred to the terminal devices (i.e., user equipments (UEs) in 3GPP terminology) in the system, which may be achieved by using a so-called allocation table or the like. This allocation table will carry information on the number of users allocated as well as an identity for these users, e.g., a radio link ID (RLID).

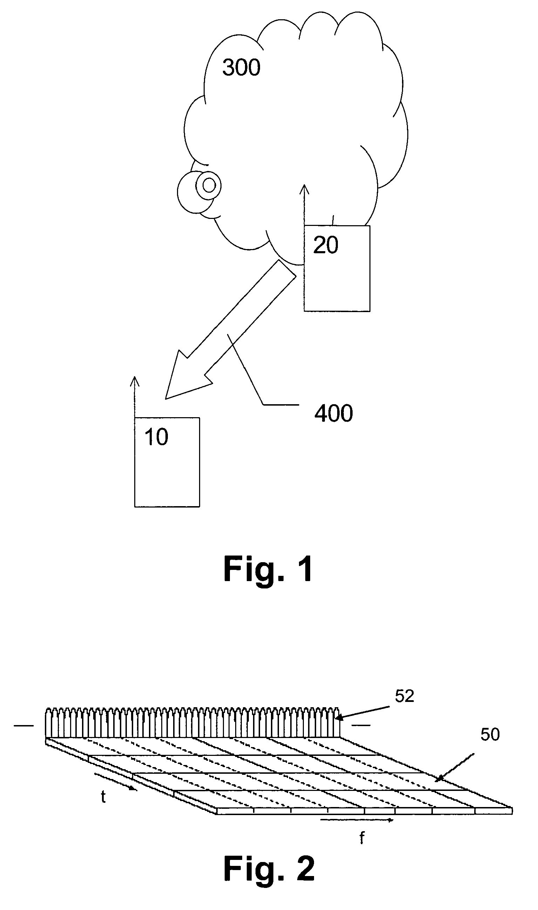

Fig. 2 shows a schematic illustration of channel-dependent scheduling and link adaptation in time and frequency domain, as used in the LTE concept, where a number of sub-carriers 52 of the OFDM symbol are grouped into a minimum scheduling unit 50, e.g., frequency resource block or resource pool, which corresponds to a resource block to be allocated. The size of a frequency resource block may range between about 400 kHz and 900 kHz. For a 20 MHz system, this will give between 21 and 48 frequency resource blocks. The current working assumption for the study item is that 25 adjacent subcarriers will construct a resource block with a size of 375 kHz. In the case of full dynamic allocations in the frequency domain, allocation of the frequency resource blocks among the users may continuously change. This requires a corresponding indication to the users, i.e., their UEs.

Different ways have been proposed to indicate allocation decisions to the users. Assuming M denotes the number of frequency resource blocks, and N denotes the number of allocated users, allocation decisions may be signaled to the users by means of a bit mask (on/off), which is simple but requires highest overhead in terms of control signalling. It requires M*N signalling bits. As an alternative, a resource allocation map has been proposed, which is made dependent on the allocations for other users, such that only the resources not given to other users are signaled for subsequent users. This will require M+(M-1)+(M-1-1)+...+(M-N) bits in the worst case (e.g. only slight reduction of signalling complexity), but the main problem of this is that the UE does not know the length of the resource allocation field in advance. As a third option, a number of bits are reserved for each resource block signalling event, such that each resource block will require ceil(log2(N+1)), and the total number of bits required will be M*ceil(log2(N+1)). As the UE knows N and M, it knows the size of the resource allocation field.

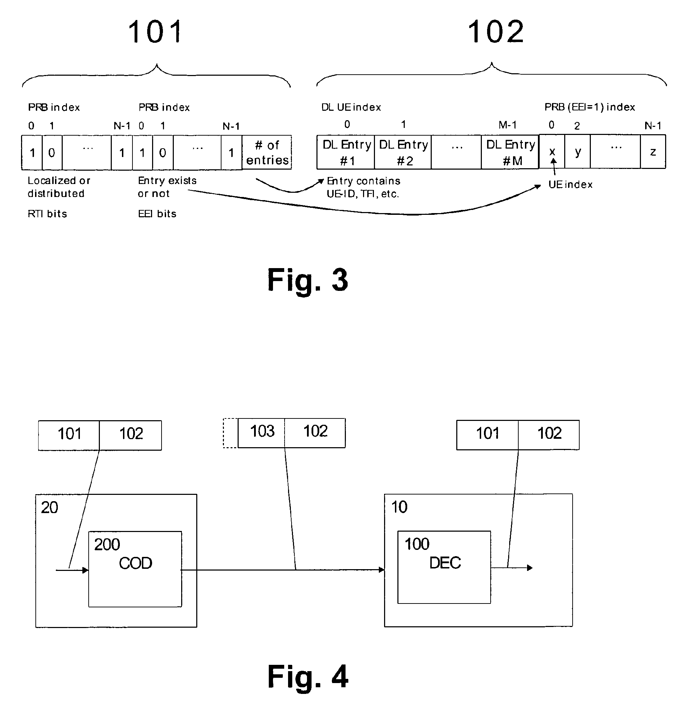

Fig. 3 shows an illustration of an example of resource allocation information signalling based on a single layer allocation table, wherein the allocation information is split into two or more parts. A fixed part 101 with a fixed size, which contains information that all users need to decode reliably. A variable part 102 (and subsequent parts) which contains information related to which users are actually allocated to different radio resources. According to the example shown in Fig. 3, the fixed part 101 of the allocation table comprises three fields. It is however noted that more fields may be needed in the final allocation table design, such as those for a cyclic redundancy code (CRC) and system-related broadcast information (paging information and the like), which have been omitted for reasons of simplicity. The three fields in the fixed length part 101 carry information related to whether the resources are allocated to localized or distributed users (first part, Resource Type Indication (RTI)), whether the resources are allocated at all (second part, Entry Existence Indication (EEI)), and the number of users allocated (basically indicating the length of the variable sized second part of the allocation table). Each of the RTI and EEI fields contains a 'bitmap' of the resource blocks, and gives for each of these an on/off indication related to the given parameter. In general, each of the bitmaps will have a length corresponding to the number of resource blocks available (24 for the 10 MHz system, and 48 for the 20 MHz system bandwidth).

All the above approaches are quite straight forward, but they are not optimum in terms of the bit number required signalling.

## SUMMARY OF THE INVENTION

It is an object of the present invention to provide an improved signalling scheme, by means of which the number of bits required for signalling scheduling decisions can be reduced.

This object is achieved by a method of signalling a scheduling information used for indicating resource allocation states of a plurality of available resource blocks to a plurality of scheduled devices, said method comprising the steps of:

- setting a resource allocation state for each of said available resource blocks;
- multiplying a value of a resource allocation state of a resource block by the number of possible allocation states to the power of a sequential number of said resource block, said sequential number starting from the value "0";
- performing said multiplying step for all available resource blocks;
- summing all multiplication results of said multiplying step; and
- transmitting the summing result obtained in said summing step to said plurality of scheduled devices.

Additionally, the above object is achieved by a network element for signalling a scheduling information used for indicating resource allocation states of a plurality of available resource blocks to a plurality of scheduled devices, said network element comprising coding means (200) configured:

- to set a resource allocation state for each of said available resource blocks;
- to multiply a value of a resource allocation state of a resource block by the number of possible allocation states to the power of a sequential number of said resource block, said sequential number starting from the value "0";
- to perform said multiplying step for all available resource blocks;
- to sum all multiplication results of said multiplying step; and
- to transmit the summing result obtained in said summing step to said plurality of scheduled devices.

Furthermore, the above object is achieved by a terminal device comprising decoding means for decoding a scheduling information signaled by using the above method.

Accordingly, although the encoding and related decoding of the fixed size allocation information field may become slightly more complex, the required amount of signalling bits can be reduced considerably, e.g., by approximately 20% in an embodiment described later, while still maintaining the same signalling information content.

In a specific example, the number of possible resource allocation states may be 3. Then, the value of the resource allocation state may be selected from the values 0, 1, and 2. The possible resource allocation states may comprise a first state indicating that a related resource block has not been allocated to a user, a second state indicating that the related resource block has been allocated to a user and is used for localized transmission, and a third state indicating that the related resource block has been allocated to a user and is used for distributed transmission.

Furthermore, the resource block may be a frequency resource block of an orthogonal frequency division multiplexing system.

As an example, the scheduling information may be used to compress a fixed-length part of an allocation table. This fixed length part may comprise a set of resource block type indicator bits and a set of entry existence indicator bits.

Further advantageous modifications are defined in dependent claims.

## BRIEF DESCRIPTION OF THE DRAWINGS

The present invention will now be described based on an embodiment with reference to the accompanying drawings in which:

Fig. 1 shows a schematic diagram indicating a network architecture in which the present invention can be implemented;

Fig. 2 shows a schematic illustration of channel-dependent scheduling and link adaptation in time and frequency domain;

Fig. 3 shows a single-layer allocation table on which the embodiment is based; and

Fig. 4 shows schematic block diagrams of a network element and terminal device according to the embodiment.

## DESCRIPTION OF THE EMBODIMENT

In the following, an embodiment of the present invention will be described based on a channel-dependent scheduling and link adaptation (rate and/or power control) in time and frequency domain, where a scheduler function or unit assigns a number of resource blocks, e.g., frequency resource blocks, to a user.

Fig. 1 shows a schematic diagram of a general network architecture in which the present invention can be implemented. A radio access network 300, e.g., a Universal Mobile Telecommunications System (UMTS) Terrestrial Access Network (UTRAN) or a Wireless Local Area Network (WLAN), provide access to a UE 10 via an access device (20), e.g., a base station device or an access point, having a scheduler functionality for scheduling resources by allocating the frequency resource blocks to users which are currently connected to the access network 300.

Allocation or scheduling decisions are signaled to the users by a scheduling information 400 transmitted to the connected users.

An efficient method of signalling the above scheduling information is provided as an optimum solution for any number of user allocations. The essence of the new signalling approach is to compress the user signal space such that the total required number of signalling bits will become ceil(M*log2(N+1)). Compared to the initially discussed signalling approach which provides a total required signalling bit number of M*ceil(log2(N+1)) as the signalling need, signalling savings can be achieved by moving the "ceil" function field, e.g., in the case of 24 available frequency resource blocks (M=24) and 4 allocated users (N=4), 22% in signalling overhead can be saved. In the case of 12 available frequency resource blocks (M=12) and 8 allocated users (N=8), 19% in signalling overhead can be saved.

The embodiment starts from the fact that the EEI and RTI fields of Fig. 3 are not orthogonal. Two bits are used per resource block (one for EEI and one for RTI). However, as these two bits can represent 4 states, and actually only 3 states are needed, there is room for compressing this information in an efficient way.

In the preferred embodiment, the compressing or encoding of the scheduling decisions or information is based on the following general equation:

$$T = \sum_{k=0}^{M-1} S_k \cdot R^k \qquad (1)$$

wherein T denotes the compressed scheduling information or total state to be signalled to the scheduled devices (users), $S_k$ denotes the resource allocation state which is selected from the values 0, 1, ..., N-1, R denotes the number of possible resource allocation states, M denotes the available number of resource blocks (frequency resource blocks), and k denotes the sequential number of the resource block, starting from index '0'.

Applied to the specific example of the fixed part 101 of the allocation information table of Fig. 3, the proposed signalling or encoding approach according to equation (1) can be used to compress the user signal space such that the total required number of signalling bits will become ceil(M*log2(3)), where M is the number of resource blocks (frequency resource blocks) for the system bandwidth. Following this approach, the signalling need for this fixed field allocation would be reduced as follows:

In the case of M=24, only 39 bits are required for signalling the EEI and RTI bits, compared to 48 bits of the conventional allocation table at a system bandwidth of 10 MHz. In the case of M=48, only 77 bits are required for signalling the EEI and RTI bits, compared to 96 bits of the conventional allocation table at a system bandwidth of 20 MHz.

The resource allocation states can be defined and set, such that the following state values are valid (the naming and order of the states is not important to the principle):

State 0: Resource not allocated for the current sub-frame
State 1: Resource allocated and used for localized transmission.

State 2: Resource allocated and used for distributed transmission.

Following equation (1), the allocation state for resource block 'k' can be obtained as follows:

$$S_k = x_k \cdot 3^k, \qquad (2)$$

where $x_k$ can take the values {0,1,2} depending on the state of the $k^{th}$ resource block.

Referring again to equation (1), the total state T can be defined as the sum of the allocation states (and decoded correspondingly). I.e., the transmitted scheduling information of the EEI and RTI bits of the fixed part 101 of Fig. 3 can be compressed or encoded to:

$$T = sum(S_k) \qquad (3)$$

over the values of the sequential number 'k' of the resource block, where k=24 for a system bandwidth of 10 MHz, and k=48 for a system bandwidth of 20 MHz.

Similarly, it is possible to define a decoding algorithm, which will decode the state information. However, as there is a tradition of specifying the encoding of data rather than the decoding, the above algorithm should be sufficient for the skilled person to derive the encoding algorithm.

Fig. 4 shows a schematic block diagram of a transmission system based on Fig. 1, wherein the access device 20 comprises an encoder or encoding function or unit 200, to which the allocation table of Fig. 3 with the fixed part 101 and variable part 102 is supplied. Based on the above equations (2) and (3), the encoding unit 200 generates a compressed scheduling information 103, which corresponds to the above total state T and comprises the content of the fixed part 101. This compressed scheduling information 103 is transmitted to the scheduled units, e.g. the UE 10, as a bit sequence together with variable part 102. The UE 10 comprises a decoder or decoding function or unit 100, which receives the compressed scheduling information 103 with the variable part 102 and applies a decoding processing to retrieve the original allocation table with the original fixed part 101.

By transmitting the compressed scheduling information 103 instead of the original fixed part 101, a significant reduction of signalling bits can be achieved.

In summary, a method, terminal device, network element, and computer program product for signalling a scheduling information used for indicating resource allocation states of a plurality of available resource blocks to a plurality of scheduled devices have been described, wherein a resource allocation state is set for each of the available resource blocks and multiplied by the number of possible allocation states to the power of a sequential number of the resource block. Then, the multiplication results of all available resource blocks are summed and the summing result is transmitted to the plurality of scheduled devices. Thereby, the required amount of signalling bits can be reduced considerably, while still maintaining the same signalling information content.

The above processing steps described above and performed by the encoder 200 of the access device 20 of Fig. 4 may be implemented as concrete hardware entities or units, or alternatively may be based on software routines controlling data processors or computer devices provided in the access device 20. The same applies to the respective decoding steps performed at the decoding unit 100 of the terminal device 10 of Fig. 4. Consequently, the embodiment may be implemented as a computer program product comprising code means for generating each individual step of the encoding or decoding procedure according to the embodiment when run on a computer device or data processor of the access device 20 or terminal device 10, respectively.

It is apparent that the invention can easily be extended to the multi-layer domain, since it relates to the content of the fixed length part. In the multi-layer domain, the layer may represent the spatial dimension. For example, in a transmission using multiple antennas, the time-frequency resource defined by the frequency resource block may be re-used by spatial multiplexing.

The described embodiment is related to signalling of frequency domain packet scheduling decisions. However, the present invention can be applied whenever efficient signalling for any kind of scheduling information is needed. The embodiment may thus vary within the scope of the attached claims.

## Claims

**1.** A method of signalling a scheduling information (101) used for indicating resource allocation states of a plurality of available resource blocks (50) to a plurality of scheduled devices (10), said method comprising the steps of:

a) setting a resource allocation state for each of said available resource blocks (50);
b) multiplying a value of a resource allocation state of a resource block (50) by the number of possible allocation states to the power of a sequential number of said resource block, said sequential number starting from the value "0";
c) performing step b) for all available resource blocks;
d) summing all multiplication results of step b); and
e) transmitting the summing result (103) obtained in step c) to said plurality of scheduled devices.

**2.** A method according to claim 1, wherein said number of possible resource allocation states is 3.

**3.** A method according to claim 1 or 2, wherein said value of said resource allocation state is selected from the values 0, 1, and 2.

**4.** A method according to any one of the preceding claims, wherein said possible resource allocation states comprise a first state indicating that a related resource block has not been allocated to a user, a second state indicating that the related resource block has been allocated to a user and is used for localized transmission, and a third state indicating that the related resource block has been allocated to a user and is used for distributed transmission.

**5.** A method according to any one of the preceding claims, wherein said resource block is a frequency resource block of an orthogonal frequency division multiplexing system.

**6.** A method according to any one of the preceding claims, wherein said scheduling information (103) is used to compress a fixed-length part (101) of an allocation table.

**7.** A method according to claim 6, wherein said fixed length part (101) comprises a set of resource block type indicator bits and a set of entry existence indicator bits.

**8.** A network element for signalling a scheduling information (101) used for indicating resource allocation states of a plurality of available resource blocks (50) to a plurality of scheduled devices (10), said network element (20) comprising encoding means (200) configured:

a) to set a resource allocation state for each of said available resource blocks (50);
b) to multiply a value of a resource allocation state of a resource block (50) by the number of possible allocation states to the power of a sequential number of said resource block, said sequential number starting from the value "0";
c) to perform step b) for all available resource blocks;
d) to sum all multiplication results of step b); and
e) to transmit the summing result (103) obtained in step c) to said plurality of scheduled devices (10).

**9.** A network element according to claim 8, wherein said number of possible resource allocation states is 3.

**10.** A network element according to claim 8 or 9, wherein said network element (20) is configured to select said value of said resource allocation state from the values 0, 1, and 2.

**11.** A network element according to claims 8 to 10, wherein said network element (20) is configured set said resource allocation states to one of a first state indicating that a related resource block has not been allocated to a user, a second state indicating that the related resource block has been allocated to a user and is used for localized transmission, and a third state indicating that the related resource block has been allocated to a user and is used for distributed transmission.

**12.** A network element according to any one of claims 8 to 11, wherein said resource block is a frequency resource block of an orthogonal frequency division multiplexing system.

**13.** A network element according to any one of claims 8 to 12, wherein said network element (20) is configured to use said scheduling information (103) to compress a fixed-length part (101) of an allocation table.

**14.** A network element according to claim 13, wherein said fixed length part (101) comprises a set of resource block type indicator bits and a set of entry existence indicator bits.

**15.** A terminal device comprising decoding means (100) for decoding a scheduling information signaled by a method according to claim 1.

**16.** A computer program product comprising code means for generating the steps of method claim 1 when run on a computer device.

**17.** A system for signalling a scheduling information (101) for indicating resource allocation states of a plurality of available resource blocks (50) to a plurality of scheduled devices (10), said system comprising a network element according to any one of claims 8 to 14, and a terminal device according to claim 15.

300
20
400
10

Fig. 1

52
50
t
f

Fig. 2

101
102
PRB index
PRB index
0 1 N-1 0 1 N-1
1 0 ... 1 1 0 ... 1
# of entries
DL UE index
0 1 M-1
DL Entry #1
DL Entry #2
...
DL Entry #M
PRB (EEI=1) index
0 2 N-1
x y ... z
Localized or distributed
RTI bits
Entry exists or not
EEI bits
Entry contains UE-ID, TFI, etc.
UE index

**Fig. 3**

101 102
103 102
101 102
20
200 COD
10
100 DEC

**Fig. 4**

European Patent Office

# EUROPEAN SEARCH REPORT

Application Number
EP 06 00 9473

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | LG ELECTRONICS: "LTE MAC scheduling and signaling parameters"<br>3GPP TSG RAN WG2 MEETING #50, [Online]<br>January 2006 (2006-01), XP002400399<br>Sophia Antipolis, France<br>Retrieved from the Internet:<br>URL:http://www.3gpp.org/ftp/tsg_ran/WG2_RL2/TSGR2_50/Documents/><br>[retrieved on 2006-09-26]<br>* the whole document *<br>----- | 1-17 | INV.<br>H04L12/56 |
| A | SAMSUNG: "Physical Channel Structure and Procedure for EUTRA Downlink"<br>3GPP TSG-RAN WG1 MEETING #42, [Online]<br>August 2005 (2005-08), XP002400400<br>London, UK<br>Retrieved from the Internet:<br>URL:http://www.3gpp.org/ftp/tsg_ran/WG1_RL1/TSGR1_42/Docs/><br>[retrieved on 2006-09-26]<br>* the whole document *<br>----- | 4,5,11,12 | TECHNICAL FIELDS SEARCHED (IPC) |
| A | "3GPP TR 25.814 V1.2.0; 3rd Generation Partnership Project; Technical Specification Group Radio Access Network; Physical Layer Aspects for Evolved UTRA (Release 7)"[Online]<br>February 2006 (2006-02), XP002400401<br>Sophia Antipolis<br>Retrieved from the Internet:<br>URL:http://www.3gpp.org/ftp/Specs/html-info/25814.htm> [retrieved on 2006-09-26]<br>Chapter 7<br>-----<br>-/-- | 1-17 | H04L |

The present search report has been drawn up for all claims

| Place of search | Date of completion of the search | Examiner |
|---|---|---|
| Munich | 26 September 2006 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 06 00 9473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3GPP TR 25.813 V0.8.3 3rd Generation Partnership Project; Technical Specification Group Radio Access Network; Evolved Universal Terrestrial Radio Access (E-UTRA) and Evolved Universal Terrestrial Radio Access Network (E-UTRAN); Radio interface protocol aspects (Releas 7)"[Online] April 2006 (2006-04), XP002400402 Sophia Antipolis Retrieved from the Internet: URL:http://www.3gpp.org/ftp/Specs/html-info/25813.htm> [retrieved on 2006-09-26] Chapters 5, 7 | 1-17 | |
| A | HANNES EKSTRÖM ET AL.: "Technical Solutions for the 3G Long-Term Evolution" IEEE COMMUNICATIONS MAGAZINE, [Online] March 2006 (2006-03), pages 38-45, XP002400403 Retrieved from the Internet: URL:http://ieeexplore.ieee.org/iel5/35/33764/01607864.pdf#search=%223g%20long-term%20ekstr%C3%B6m%22> [retrieved on 2006-09-26] * pages 38-42 * | 1-17 | TECHNICAL FIELDS SEARCHED (IPC) |

The present search report has been drawn up for all claims

| Place of search | Date of completion of the search | Examiner |
|---|---|---|
| Munich | 26 September 2006 | Kreppel, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)